# EUROPÄISCHE PATENTSCHRIFT

(11) **EP 1 057 669 B1**
(45) Veröffentlichungstag und Bekanntmachung des Hinweises auf die Patenterteilung: **15.09.2004**
(21) Anmeldenummer: 00109157.8
(22) Anmeldetag: 08.05.2000
(51) Int. Cl.: B60H 1/32, F25B 31/00

(54) **Elektrisch angetriebenes Kompressionskältesystem mit überkritischem Prozessverlauf**
Electrically driven compression cooling system with supercritical process cycle
Système de refroidissement à compression à entraînement électrique avec cycle de procédé supercritique

(30) Priorität: 05.06.1999 DE 19925744
(43) Veröffentlichungstag der Anmeldung: 06.12.2000
(73) Patentinhaber: Siemens Aktiengesellschaft, 80333 München (DE)
(72) Erfinder: Knaus, Hans-Martin, 67346 Speyer (DE); Reuter, Siegfried, 35510 Butzbach (DE); Kettner, Detlef, 68782 Brühl (DE)

(56) Entgegenhaltungen:
- EP-A- 0 740 117
- EP-A- 0 786 632
- US-A- 3 388 559
- US-A- 4 720 981
- US-A- 5 245 836
- PATENT ABSTRACTS OF JAPAN vol. 1999, no. 01, 29. Januar 1999 (1999-01-29) & JP 10 281064 A (DAIKIN IND LTD), 20. Oktober 1998 (1998-10-20)

## Beschreibung

Die Erfindung betrifft ein Kompressionskältesystem einer Kraftfahrzeugklimaanlage mit überkritischem Prozeßverlauf, wobei im Kompressionskältesystem über Kältemittelleitungen ein zirkulierender Umlauf eines Kältemittels von einem Verdichter über einen Gaskühler, ein Expansionsorgan und einen Verdampfer zurück zum Verdichter erfolgt. Weiterhin betrifft die Erfindung ein Verfahren zum Betreiben eines entsprechenden Kompressionskältesystems.

Kompressionskältesysteme in heutigen Kraftfahrzeugklimaanlagen werden direkt vom Verbrennungsmotor des Fahrzeuges über einen Riementrieb angetrieben. Hierdurch hängt die Drehzahl des durch den Riementrieb angetriebenen Verdichters direkt mit der Drehzahl des Verbrennungsmotors zusammen. Die Drehzahl des Verbrennungsmotors variiert jedoch sehr stark unter den verschiedenen Betriebsbedingungen des Fahrzeugs. So wird beispielsweise bei schneller Autobahnfahrt eine hohe Drehzahl vorherrschen, während bei Stadtfahrten oder insbesondere auch im Stau niedrige Umdrehungszahlen dominierend sind. Somit steht gerade bei langsamer Fahrt, bei der die geforderte Kälteleistung der Klimaanlage in der Regel am größten ist, das niedrigste Drehzahlniveau zur Verfügung. Um eine Regelung der Kälteleistung bei diesen Anlagen unabhängig von der Drehzahl des Verbrennungsmotors zu gewährleisten, weisen diese Anlagen Verdichter mit einem variablen Hubraum auf. Hierbei handelt es sich beispielsweise um sogenannte Taumelscheibenverdichter. Diese Anlagen weisen mehrere Nachteile auf, wie beispielsweise die erforderliche Anhebung der Leerlaufdrehzahl des Verbrennungsmotors, um ein Absterben desselben zu verhindern oder die Verschlechterung des volumetrischen Wirkungsgrades bei Abregelung der Anlage aufgrund des konstruktiv bedingten Rückexpansionsvolumens. Eine Verschlechterung des Wirkungsgrades wirkt sich insbesondere auf den Energieverbrauch negativ aus.

Um die vorgenannten Nachteile zu vermeiden, wurden auch bereits elektrisch angetriebene Kompressionskältesysteme für Kraftfahrzeuge vorgeschlagen, wie beispielsweise in der DE 37 31 360 A1. Bei elektrisch angetriebenen Kompressionskältesystemen kann die Kälteleistung direkt dem aktuell zur Kühlung des Fahrzeuginnenraums erforderlichen Wert angepaßt werden. Insbesondere kann eine nachträgliche Erwärmung der abgekühlten Luft unterbleiben. Elektrisch angetriebene Kompressionskältesysteme bieten daher eine gute Möglichkeit, den Primärenergieeinsatz zu optimieren. Allerdings sind mit der neuen Antriebsart auch zusätzliche Probleme verbunden. Zu erwähnen ist insbesondere das Problem der Wärmeentwicklung des Elektromotors und der Motorsteuerung. In der DE 37 31 360 A1 wird daher vorgeschlagen, die vom Fahrer gewählten Komforteinstellungen sequentiell zu übersteuern bzw. außer Acht zu lassen, um eine Überbelastung des Elektromotors zu vermeiden. Dies bedeutet mit anderen Worten, daß die Temperatur am Elektromotor bestimmt wird und bei Erreichen eines kritischen Grenzwertes eine Abregelung erfolgt. Durch diese Maßnahme wird aber unter Umständen gerade dann, wenn eine hohe Kälteleistung erforderlich wird, eine Reduzierung derselben vorgenommen. Aus der US 3,388,559 ist es bekannt, einen Elektromotor mit dem Kältemittel des Kompressionskältesystems zu kühlen. In der DE 37 31 360 A1 und in der US 3,388,559 werden Kältesysteme mit überkritischem Prozessverlauf nicht erwähnt. Von einem überkritischen Prozessverlauf spricht man dann, wenn zwischen dem Verdichterausgang und dem Eingang des Expansionsorgans kein Phasenübergang gasförmig/flüssig stattfindet. Ein solcher überkritischer Prozessverlauf findet sich beispielsweise bei Verwendung von CO₂ als Kältemittel. Aus der EP 0 786 632 A2 ist ein Kompressionskältesystem mit dem Kältemittel CO₂ bekannt.

Aufgabe der Erfindung ist es daher, ein Kompressionskältesystem mit überkritischem Prozessverlauf anzugeben, bei dem die genannten Nachteile vermieden werden und das gleichzeitig einen hohen Wirkungsgrad und somit einen geringen Primärenergieeinsatz aufweist.

Die Aufgabe wird durch ein Kompressionskältesystem mit den Merkmalen des Anspruchs 1 gelöst.

Durch die Abführung der Verlustwärme des Motors und/oder der Motorsteuereinrichtung über das Kältemittel wird eine sehr effiziente Kühlung dieser Elemente erreicht. Im Bereich zwischen dem Ausgang des Expansionsorgans und dem Eingang des Verdichters (Kompressors) weist das Kältemittel eine Temperatur von nur wenigen Grad Celsius auf. Sowohl die Temperatur des Motors als auch der Motorsteuereinrichtung können daher durch die erfindungsgemäße Maßnahme auf ein Temperaturniveau abgesenkt werden, bei dem die Verluste des Motors und der Motorsteuereinrichtung wesentlich niedriger sind, als bei den hohen Temperaturen, die üblicherweise im Motorraum herrschen. Durch das niedrige Temperaturniveau wird so beispielsweise der Wicklungswiderstand der Motorwicklungen deutlich abgesenkt. Allein durch die Absenkung der Betriebstemperatur des Motors und/oder der Motorsteuereinrichtung kann daher bereits der Primärenergieeinsatz reduziert werden, da weniger Verlustwärme entsteht.

Es wurde erkannt, dass durch die Verlustwärme des Motors und/oder der Motorsteuereinrichtung, die dem Kältemittel zugeführt wird, bei ansonsten unverändertem Gesamtsystem eine Verschlechterung des Wirkungsgrades der Kompressionskälteanlage eintreten kann. Durch die Zuführung zusätzlicher Wärme an das Kältemittel kann die Überhitzung des Kältemittels am Eingang des Kompressors überhöht sein. Durch eine erhöhte Verdichteraustrittstemperatur erfolgt nun weiterhin eine Erhöhung des Druckes und der spez. Enthalpie am Gaskühlereintritt, so dass infolge dieses Prozesses der Wirkungsgrad der Anlage sinkt. Um diese unerwünschte Wirkung sicher zu vermeiden, sind daher weiterhin Mittel zur Einstellung der Überhitzung des Kältemittels am Verdichtereingang vorgesehen. Hierdurch wird erreicht, dass die Überhitzung am Verdichtereingang den gewünschten Wert nicht überschreitet. Insbesondere wird dabei die Aufnahme der Abwärme des Motors und/oder der Motorsteuereinrichtung berücksichtigt. Zur Einstellung der Überhitzung am Verdichtereingang kann insbesondere ein thermostatisches Expansionsventil oder ein elektronisch geregeltes Expansionsventil vorgesehen sein. Durch Regelung des Durchlasses des Ventils und damit des Kältemittelmassenstroms wird dabei die Überhitzung des Kältemittels am Verdichtereintritt eingestellt. Die Referenzüberhitzung für die Regelung des Expansionsorgans wird dabei erfindungsgemäß direkt am Verdichtereingang abgenommen. Hierdurch wird automatisch der Einfluss der Abwärme des Motors und/oder der Motorsteuereinrichtung berücksichtigt.

In einer bevorzugten Anordnung ist der Elektromotor zusammen mit dem Verdichter in einem gemeinsamen Gehäuse untergebracht. Diese Anordnung hat den Vorteil, daß Undichtigkeiten an einer drehenden Welle, die bei Anordnung des Elektromotors außerhalb des Verdichtergehäuses auftreten können, von Anfang an vermieden werden. Eine besonders effektive Kühlung des Elektromotors wird dabei dann erreicht, wenn der Elektromotor direkt vom Kältemittel umflossen (umströmt) wird. In einer bekannten Ausführungsform weist der Elektromotor 5 eine Hohlwelle auf, durch die das Kältemittel von der Kältemittelleitung zum Verdichter 6 befördert wird. Bei dieser bekannten Ausführungsform wird der Elektromotor 5 somit höchstens in geringem Maße durch das Kältemittel gekühlt.

Um eine effiziente Kühlung der Motorsteuereinrichtung zu erreichen, ist diese in engem thermischen Kontakt zum Kältemittel, vorzugsweise im Bereich zwischen dem Ausgang des Expansionsorgans und dem Eingang des Verdichters, also im Bereich niedriger Kältemitteltemperaturen, angeordnet. Gemäß einer speziellen Ausführungsform wird die Motorsteuereinrichtung direkt vom Kältemittel umflossen. Es ist jedoch beispielsweise auch möglich, die Motorsteuereinrichtung außerhalb des Kältemittelflusses am Gehäuse des Verdichters oder an den Kältemittelleitungen in gutem thermischen Kontakt zum Kältemittel anzuordnen.

Das erfindungsgemäße Verfahren zum Betreiben eines Kompressionskältesystems eines Fahrzeuges geht von einem Kältesystem aus, das einen von einem Elektromotor mit Motorsteuereinrichtung angetriebenen Verdichter, einen Gaskühler, ein regelbares Expansionsorgan und einen Verdampfer sowie einen Kältemittelkreislauf mit einem Kältemittel aufweist. Bedingt durch die bekannte Arbeitsweise eines solchen Kompressionskältesystems weist dieses Bereiche mit einem niedrigen und einem höheren Temperaturniveau auf.

Erfindungsgemäß ist nunmehr vorgesehen, daß der Elektromotor oder die Motorsteuereinrichtung durch das Kältemittel im Bereich des niedrigen Temperaturniveaus gekühlt wird. Weiterhin ist vorgesehen, daß der Kältemitteldurchlaß des Expansionsorgans so geregelt wird, daß das Kältemittel am Eingang des Verdichters eine nahezu konstante Überhitzung aufweist. Durch diese Verfahrensweise wird ein energieeffizienter Betrieb des Kompressionskältesystems erreicht. Der Elektromotor und/oder die Motorsteuereinrichtung arbeiten in einem Bereich mit einem reduzierten Temperaturniveau, so daß verringerte Verluste bei diesen Elementen auftreten. Gleichzeitig wird am Eingang des Verdichters eine nahezu konstante Überhitzung des Kältemittels eingestellt. Durch diese Vorgehensweise wird die Temperatur- bzw. Überhitzungserhöhung des Kältemittels durch die Abwärme des Elektromotors und/oder der Motorsteuereinrichtung berücksichtigt. Die Überhitzung am Verdichtereingang wird dabei so eingestellt werden, daß sogenannte Flüssigkeitsschläge im Verdichter ausgeschlossen werden können.

Flüssigkeitsschläge im Verdichter entstehen durch nicht hundertprozentig verdampftes Kältemittel. Ein vorhandener Flüssigkeitsanteil im gasförmigen Kältemittel ist nicht kompressibel. Aufgrund des hochdynamischen Verdichtungsvorganges und der Trägheit der Auslaßventile, kann es daher zum Flüssigkeitsschlag im Kompressionsraum kommen. Dieser Effekt kann bis zum Ausfall des Verdichters führen.

Zur Vermeidung von Flüssigkeitsschlägen wird die Überhitzung des Kältemittels am Verdichtereingang so gewählt werden, daß eine leichte Überhitzung von beispielsweise etwa 5 - 15 K vorliegt. Ein hoher Wert für die Überhitzung ist zwar an sich zulässig, wirkt sich jedoch negativ auf den Wirkungsgrad der Gesamtanlage aus.

Die Erfindung wird nachfolgend anhand der Zeichnung näher erläutert. Es zeigen:
- Figur 1: ein Kompressionskältesystem mit elektrisch angetriebenem Verdichter und verschiedenen Einbauorten der Motorsteuereinrichtung im Kältemittelkreislauf,
- Figur 2: ein Kompressionskältesystem mit elektrisch angetriebenem Verdichter und verschiedenen Einbauorten der Motorsteuereinrichtung in thermisch engem Kontakt zum Kältemittelkreislauf, jedoch außerhalb desselben,
- Figur 3: ein erfindungsgemäßes Kompressionskältesystem mit elektrisch angetriebenem Kompressor mit Mitteln zur Einstellung der Kältemittelüberhitzung am Verdichtereingang,
- Figur 4: eine Darstellung des im Kompressionskältesystem ablaufenden überkritischen Kreisprozesses im Mollier-h, lg p-Diagramm,
- Figur 5: eine schematische Darstellung einer Heizungs- und Klimaanlage eines Kraftfahrzeuges.

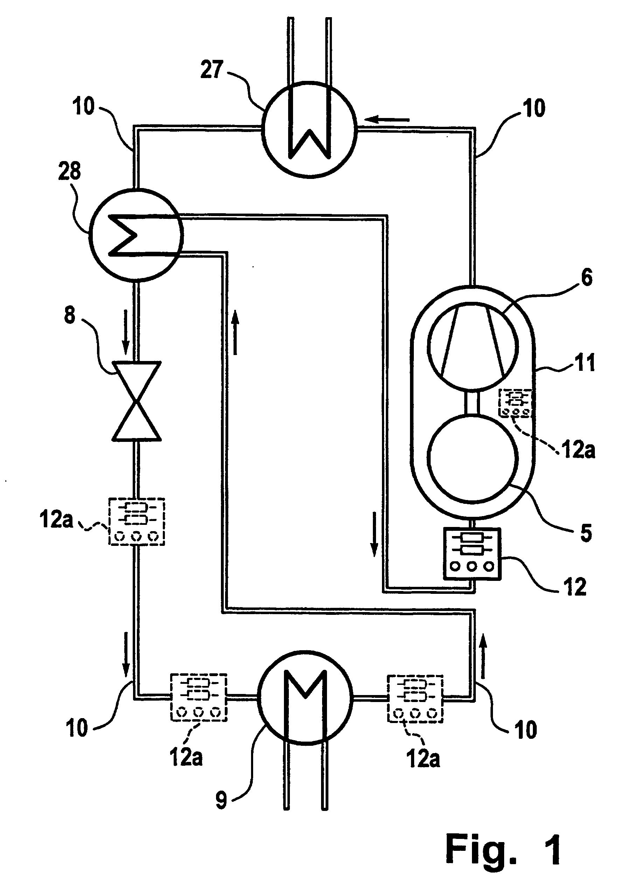

In Figur 1 ist ein Kompressionskältesystem schematisch dargestellt. Es weist einen von einem Elektromotor 5 angetriebenen Verdichter 6 auf. Bei dem Verdichter 6 kann es sich insbesondere um einen an sich bekannten Spiralverdichter handeln. Mit Hilfe eines Spiralverdichters wird insbesondere eine kontinuierliche pulsationsarme Förderung eines nicht dargestellten Kältemittels erreicht. Das Kältesystem weist ferner einen Gaskühler 27, einen - für die grundsätzliche Funktion des Kältesystems entbehrlichen - Wärmeaustauscher (innerer Wärmetauscher) 28, ein Expansionsorgan 8 und einen Verdampfer 9 auf. Der Verdichter 6, Gaskühler 27, Expansionsorgan 8 und Verdampfer 9 sind in der dargestellten Weise mittels Kältemittelleitungen 10 verbunden, so daß ein kontinuierlicher Kreislauf eines Kältemittels vom Verdichter 6 über den Gaskühler 27, das Expansionsorgan 8 und den Verdampfer 9 zurück zum Verdichter 6 erzielt wird.

Im Verdichter 6 wird das Kältemittel verdichtet und anschließend dem Gaskühler 27 zugeführt. Im Gaskühler 27 erfolgt eine Wärmeabgabe an ein äußeres Medium. Aufgrund des überkritischen Prozeßverlaufs verbleibt das Kältemittel im gasförmigen Zustand. Im Expansionsorgan 8 erfolgt eine Entspannung des Kältemittels und damit eine Abnahme des Druckes. Das Kältemittel liegt dann als Naßdampf vor. Der Bereich zwischen dem Kompressor 6 über den Gaskühler 27 bis zum Expansionsorgan 8 bildet die Hochdruckseite des Kältesystems. Das durch das Expansionsorgan 8 entspannte Kältemittel tritt in den Verdampfer 9 ein und nimmt dort Wärme von einem äußeren Medium auf. Das gasförmige Kältemittel wird schließlich vom Verdichter 6 angesaugt und der gesamte Vorgang startet von neuem. Der Bereich vom Expansionsorgan 8 über den Verdampfer 9 bis zum Eingang des Verdichters 6 bildet die Niederdruckseite des Kältesystems. Gleichzeitig ist dies auch der Bereich mit einem niedrigen Temperaturniveau, verglichen mit dem Temperaturniveau der Hochdruckseite.

Durch den zusätzlichen Wärmeaustauscher 28, der einen Wärmeaustausch zwischen der Hochdruckseite und der Saugleitung zum Verdichter 6 ermöglicht, kann eine Verbesserung der gesamten Kälteleistung des Systems erreicht werden.

Gemäß der in Figur 1 dargestellten Ausführungsform befinden sich der Elektromotor 5 und der Verdichter 6 in einem gemeinsamen Gehäuse 11, und der Elektromotor 5 wird von dem Kältemittel umflossen. Somit findet eine sehr gute Kühlung des Elektromotors 5 durch das Kältemittel statt.

Es ist nun weiter vorgesehen, daß auch die Motorsteuereinrichtung 12 in engem thermischen Kontakt zum Kältemittel angeordnet ist. Durch die Darstellungsweise in der schematischen Darstellung der Figur 1 soll angedeutet werden, daß sich die Motorsteuereinrichtung 12 im Kältekreislauf befindet, d.h. die Motorsteuereinrichtung 12 wird von dem Kältemittel umflossen. Hierdurch wird eine optimale Abführung der Abwärme der Motorsteuereinrichtung erzielt. In der Figur 1 sind verschiedene alternative Einbaulagen 12a der Motorsteuereinrichtung innerhalb des Kältemittelkreislaufes gestrichelt dargestellt. Insbesondere kann die Motorsteuereinrichtung zusammen mit dem Elektromotor 5 und dem Verdichter 6 in einem gemeinsamen Gehäuse 11 untergebracht werden. Alternative Anbringungsorte liegen zwischen dem Expansionsorgan 8 und dem Verdampfer 9, im Verdampfer und zwischen dem Verdampfer 9 und dem Elektromotor 5 bzw. dem Verdichter 6. Durch die Anordnung der Motorsteuereinrichtung 12 auf der Niederdruckseite und damit auch auf der Niedertemperaturseite des Kältemittelkreislaufes wird eine besonders effiziente Kühlung der Motorsteuereinrichtung 12 erreicht. In diesem Bereich beträgt die Kältemitteltemperatur nur wenige Grad Celsius. Aufgrund des gegenüber anderen Ausführungsformen deutlich niedrigeren Temperaturniveaus der Motorsteuereinrichtung 12 treten in dieser auch nur deutlich niedrigere Verluste auf. Ursache hierfür ist die niedrigere Verlustwärme der in der Motorsteuereinrichtung eingesetzten Bauelemente bei niedrigerem Temperaturniveau. Derselbe Effekt tritt auch bei dem durch das Kühlmittel auf ein niedrigeres Temperaturniveau abgekühlten Elektromotor 5 auf. Insbesondere sind dessen Wicklungsverluste deutlich niedriger als bei Betrieb auf hohem Temperaturniveau im Motorraum des Kraftfahrzeuges.

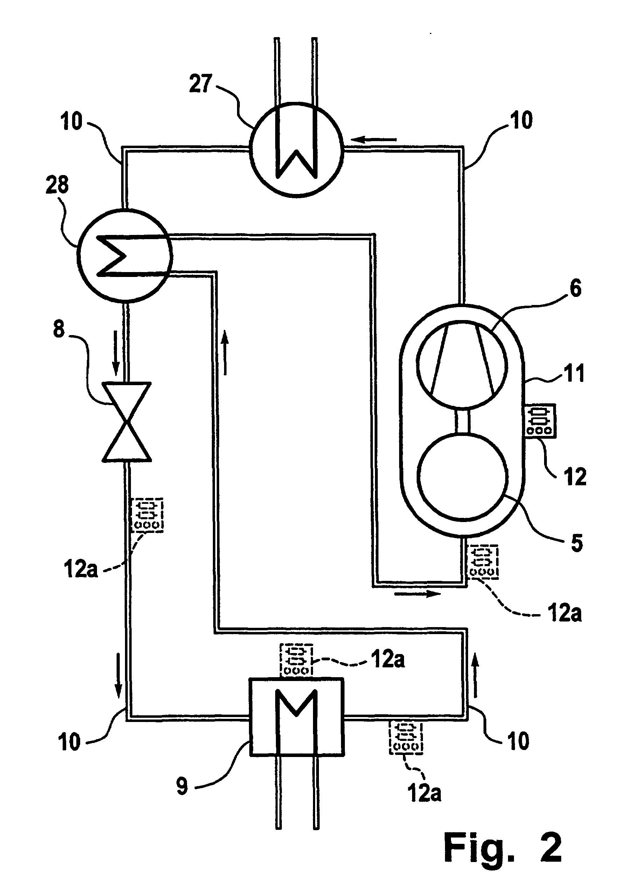

In Figur 2 ist eine weitere Ausführungsform eines Kompressions kältesystems dargestellt. Auch hier befindet sich der Elektromotor 5 zusammen mit dem Kompressor 6 in einem gemeinsamen Gehäuse 11. Der Elektromotor wird vorzugsweise vom Kühlmittel umflossen und gekühlt. Abweichend von der Ausführungsform der Figur 1 ist hier jetzt jedoch die Motorsteuereinrichtung 12 nicht direkt im Kältemittelkreislauf eingeschlossen, sondern die Motorsteuereinrichtung 12 befindet sich in engem thermischem Kontakt zum Kältemittel, ohne von diesem umflossen zu werden. So kann die Motorsteuereinrichtung 12 beispielsweise direkt am Gehäuse 11 angebracht sein, wobei das Innere des Gehäuses mit Kältemittel ausgefüllt ist. Besteht das Gehäuse 11 aus einem metallischen Werkstoff, so findet ein sehr guter Wärmeübergang von der Motorsteuereinrichtung 12 zum Kältemittel innerhalb des Gehäuses statt. Auch durch diese Ausführungsform wird erreicht, daß die Motorsteuereinrichtung 12 im wesentlichen durch das Kältemittel gekühlt wird. Alternative Einbauorte der Motorsteuereinrichtung sind in Figur 2 wiederum gestrichelt dargestellt. Insbesondere kann die Motorsteuereinrichtung auf der Niederdruckseite des Kältesystems direkt an eine Kältemittelleitung 10 angeflanscht sein. Weiterhin ist ein Einbau der Motorsteuereinrichtung am Verdampfer 9 möglich.

Durch die Anordnung der Motorsteuereinrichtung 12 bzw. des Elektromotors 5 mit Kühlung über das Kältemittel wird das Kältemittel auf der Niederdruckseite mit einer zusätzlichen Wärmemenge beaufschlagt. Hierdurch kann die Überhitzung des Kältemittels am Eingang des Verdichters 6 damit auf einem höheren Niveau liegen, als bei anderen Kältesystemen. Falls dies aus energetischer Sicht nicht wünschenswert erscheint, kann durch weiter unten beschriebene erfinderische Maßnahmen Abhilfe geschaffen werden.

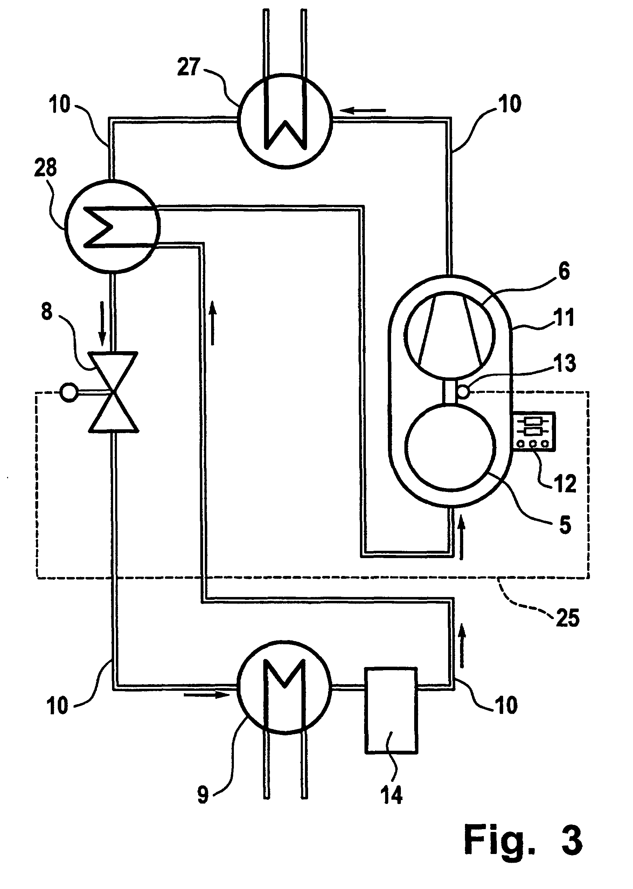

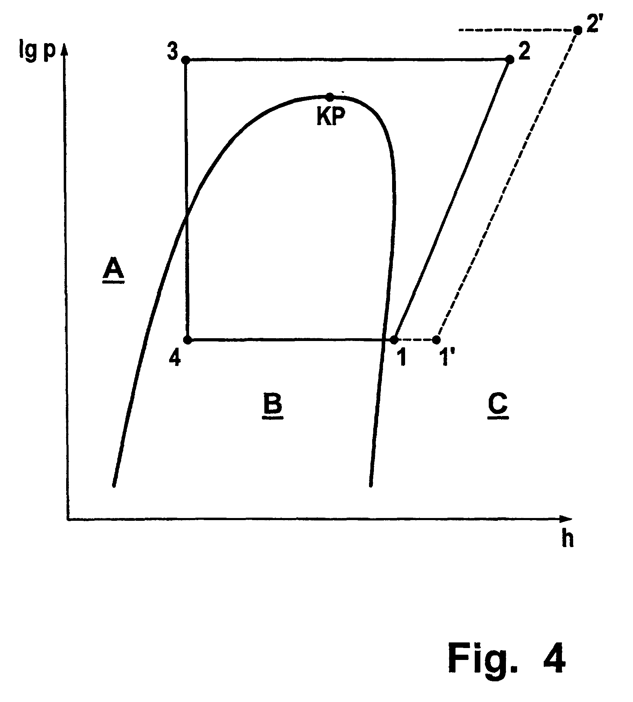

Figur 4 zeigt ein Mollier-Diagramm mit der spezifischen Enthalpie h und dem Logarithmus des Druckes p. Für das Kältemittel werden drei Bereiche A, B, C unterschieden. Im Bereich A liegt das Kältemittel flüssig und im Bereich C gasförmig vor. Im Bereich B liegt das Kältemittel dagegen als sogenannter Naßdampf vor, d.h. gasförmig mit Flüssigkeitströpfchen. Im Diagramm der Figur 4 ist der im Kältesystem ablaufende Kreisprozeß eingezeichnet. Hierin sind gemäß der standardisierten Bezeichnungsweise mit 1 der Verdichtereintritt, mit 2 der Verdichteraustritt, mit 3 der Expansionsorganseintritt und mit 4 der Verdampfereintritt bzw. der Expansionsorgansaustritt bezeichnet. Der Übergang zwischen dem Verdichteraustritt und dem Expansionsorganseintritt (Linie 2-3) liegt oberhalb des kritischen Punktes KP, so daß das Kältemittel im gasförmigen Zustand verbleibt. Man spricht daher von einem überkritischen Prozeßverlauf, der beispielsweise bei Verwendung von CO₂ als Kältemittel auftritt. Wie eingangs bereits erwähnt, wird die Überhitzung am Verdichtereintritt und damit auch die spez. Enthalpie im Punkt 1 so gewählt, daß das Kältemittel keine Flüssigkeitströpfchen enthält. Dies bedeutet mit anderen Worten, daß der Punkt 1 im Bereich C liegen muß. Dies wird bei anderen bekannten Kältemittelsystemen dadurch erreicht, daß die Überhitzung am Verdampferausgang auf einen nahezu konstanten Wert eingestellt wird. Dies wird durch Regelung des durch das Expansionsorgan 8 fließenden Kältemittelmenge erreicht. In Kältemittelsystemem gemäß 166.1 und 2 kann je nach Anbringungsort der Motorsteuereinrichtung 12 eine von der aktuellen Verlustleistung der Motorsteuereinrichtung abhängige Wärmemenge dem Kältemittel zugeführt werden, so daß am Eingang des Verdichters 6 eine Überhitzungs- und damit Enthalpieerhöhung auftreten kann. Der Punkt 1 kann somit zum Punkt 1' verschoben werden. Durch die Verdichtung des Kältemittels im Verdichter 6 ergibt sich dadurch auch eine Verschiebung des Punktes 2 zum Punkt 2', d.h. daß ein höherer Druck am Verdichteraustritt vorliegt. Eine solche mögliche Verschiebung des Diagramms des ablaufenden Kreisprozesses hat eine Verschlechterung des Wirkungsgrades des Kältesystems zur Folge. Durch die nachfolgend anhand der Figur 3 beschriebene erfinderische Ausgestaltung wird eine solche mögliche Verschlechterung der Wirkungsgrades des Kältesystems sicher vermieden.

Figur 3 zeigt wiederum das Kältesystem mit Verdichter 6, Gaskühler 27, Expansionsorgan 8 und Verdampfer 9. Zusätzlich ist ein Flüssigkeitsabscheider 14 zwischen Verdampfer 9 und Verdichter 6 vorgesehen. Der Verdichter 6 befindet sich zusammen mit dem Elektromotor 5 in einem gemeinsamen Gehäuse 11. Der Elektromotor 5 wird vom Kältemittel direkt umflossen. Die Motorsteuereinrichtung 12 ist am Gehäuse 11 angeordnet und wird auf diese Weise ebenfalls durch das Kältemittel gekühlt. Durch die Abwärme des Elektromotors 5 und die Motorsteuereinrichtung 12 wird die spez. Enthalpie des Kältemittels auf dem Weg vom Verdampfer 9 zum Eingang des Verdichters 6 erhöht. Damit am Eingang des Verdichters 6 eine energetisch günstige Überhitzung vorliegt, ist nun erfindungsgemäß vorgesehen, daß am Eingang des Verdichters 6 ein Temperaturfühler 13 angebracht ist, der mit dem Expansionsorgan 8 über eine Fühlerleitung 25 in Verbindung steht. Der Kältemittelmassenstrom durch das Expansionsorgan 8 wird nun so geregelt, daß am Verdichtereingang stets nahezu die gleiche gewünschte Überhitzung anliegt. Die zeitlich variierende Wärmeabgabe der Motorsteuereinrichtung 12 und des Elektromotors 5 an das Kältemittel kann somit ausgeglichen werden. Durch Wahl der optimalen Kältemittelparameter am Verdichtereingang kann somit ein hoher Wirkungsgrad des Kältesystems bei gleichzeitig sicherem Betrieb ohne Flüssigkeitsschläge im Verdichter 6 erreicht werden. Durch die aufgrund der niedrigeren Temperatur des Elektromotors 5 und der Motorsteuereinrichtung 12 verringerten Wärmeverluste dieser Elemente wird der Wirkungsgrad des Gesamtsystems zudem weiter erhöht. Hinzu kommt schließlich noch die optimale Regelung des Kältesystems in Abhängigkeit von der geforderten Kälteleistung durch die gute Regelbarkeit des Elektromotors 5.

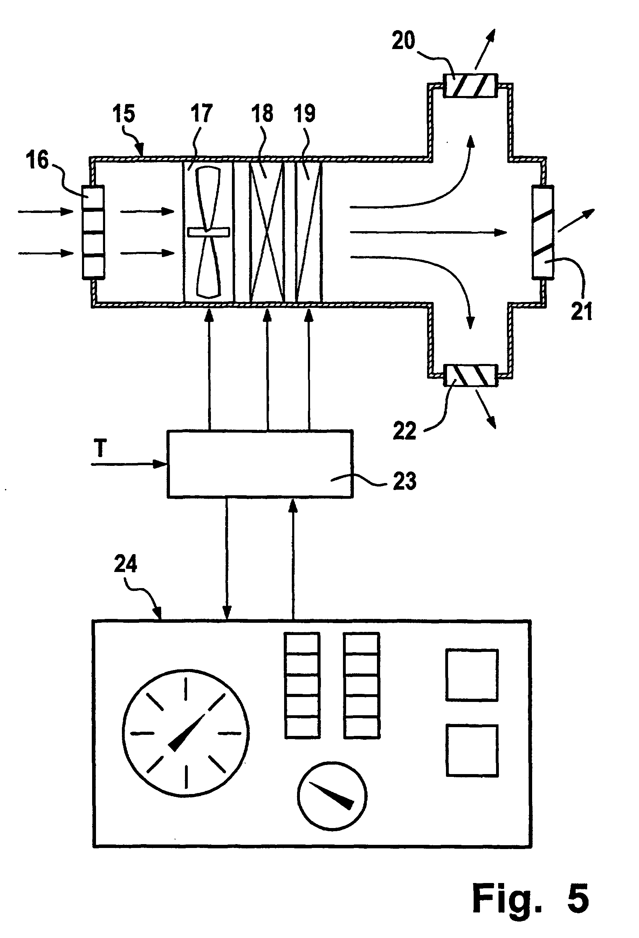

In der Figur 5 ist eine Lüftungs- und Klimatisierungseinrichtung eines Kraftfahrzeuges schematisch dargestellt, in der das beschriebene Kompressionskältesystem zum Einsatz kommt. Zur Luftzuführung in den Innenraum des Kraftfahrzeuges weist die Klimaanlage einen Luftkanal 15 auf, der die Luft von der Lufteinströmöffnung 16 mittels eines Gebläses 17 über die Kühlvorrichtung 18 und die Heizvorrichtung 19 zu den Ausströmöffnungen 20, 21, 22 in den Innenraum leitet. Die Klimaregelung erfolgt über den Klimaregler 23, der das Gebläse 17, die Kühlvorrichtung 18 und die Heizvorrichtung 19 ansteuert. Eingangssignal für den Klimaregler sind neben der Innenraumtemperatur T, die mittels eines Temperatursensors gemessen wird, auch die Einstellgrößen, die über die Bedienelemente der Bedieneinheit 24 gewählt werden. Die Kühlvorrichtung 18 beinhaltet nun das zuvor beschriebene Kompressionskältesystem. Im Luftstrom des Luftkanals 15 ist dabei der Verdampfer 9 des Kompressionskältesystems angeordnet. Im Verdampfer nimmt das Kältemittel somit Wärme von der im Luftkanal 15 angesaugten Luft auf und kühlt diese ab bevor sie dem Fahrzeuginnenraum zugeführt wird. Hierdurch wird die gewünschte Kühlwirkung des Fahrzeuginnenraums erreicht.

## Patentansprüche

1. Kompressionskältesystem einer Kraftfahrzeugklimaanlage mit überkritischem Prozessverlauf, wobei im Kompressionskältesystem über Kältemittelleitungen (10) ein zirkulierender Umlauf eines Kältemittels von einem Verdichter (6) über einen Gaskühler (27), ein Expansionsorgan (8) und einen Verdampfer (9) zurück zum Verdichter (6) erfolgt, **dadurch gekennzeichnet, dass** der Verdichter (6) von einem Elektromotor (5) mit Motorsteuereinrichtung (12) angetrieben wird, und dass der Motor (5) und/oder die Motorsteuereinrichtung (12) derart angeordnet sind, dass die Abführung der Verlustwärme des Motors (5) und/oder der Motorsteuereinrichtung (12) im Wesentlichen über das Kältemittel des Kompressionskältesystems erfolgt, und dass am Eingang des Verdichters (6) ein Temperaturfühler (13) angebracht ist, der zur Einstellung der Überhitzung des Kältemittels am Verdichtereingang mit dem Expansionsorgan (8) verbunden ist.

2. Kompressionskältesystem nach einem der vorhergehenden Ansprüche, **dadurch gekennzeichnet, dass** der Elektromotor (5) und der Verdichter (6) in einem gemeinsamen Gehäuse untergebracht sind.

3. Kompressionskältesystem nach einem der vorhergehenden Ansprüche, **dadurch gekennzeichnet**, das der Elektromotor (5) vom Kältemittel umflossen wird.

4. Kompressionskältesystem nach einem der Ansprüche 1 bis 3, **dadurch gekennzeichnet, dass** die Motorsteuereinrichtung (12) in engem thermischen Kontakt zum Kältemittel zwischen dem Ausgang des Expansionsorgans (8) und dem Eingang des Verdichters (6) angeordnet ist.

5. Kompressionskältesystem nach Anspruch 4, **dadurch gekennzeichnet, dass** die Motorsteuereinrichtung (12) vom Kältemittel umflossen wird.

6. Kompressionskältesystem nach einem der vorhergehenden Ansprüche, **dadurch gekennzeichnet, dass** die Mittel zur Einstellung der Überhitzung am Verdichtereingang ein thermostatisches Expansionsventil enthalten.

7. Kompressionskältesystem nach einem der vorhergehenden Ansprüche, **dadurch gekennzeichnet, dass** die Mittel zur Einstellung der Überhitzung am Verdichtereingang ein elektronisch geregeltes Expansionsventil enthalten.

8. Kompressionskältesystem nach einem der vorhergehenden Ansprüche, **dadurch gekennzeichnet, dass** als Kältemittel CO₂ eingesetzt wird.

9. Kompressionskältesystem nach einem der vorhergehenden Ansprüche, **dadurch gekennzeichnet, dass** ein zusätzlicher Wärmeaustauscher (28) für den Wärmeaustausch zwischen der Hochdruckseite und der Niederdruckseite des Kältesystems vorhanden ist.

10. Verfahren zum Betreiben eines Kompressionskältesystems eines Kraftfahrzeugs mit einem von einem Elektromotor (5) mit Motorsteuereinrichtung (12) angetriebenen Verdichter (6), Gaskühler (27), regelbarem Expansionsorgan (8) und Verdampfer (9), sowie einem Kältemittelumlauf vom Verdichter (6) über den Gaskühler (27), das regelbare Expansionsorgan (8) und dem Verdampfer (9) zurück zum Verdichter (6) mit einem Kältemittel, das bedingt durch die Arbeitsweise des Kompressionskältesystems Bereiche mit einem niedrigeren und einem höheren Temperaturniveau aufweist, **dadurch gekennzeichnet , dass** das Kompressionskältesystem einen überkritischen Prozessverlauf aufweist, der Elektromotor (5) und/oder die Motorsteuereinrichtung (12) durch das Kältemittel des Kompressionskältesystems im Bereich des niedrigeren Temperaturniveaus gekühlt wird und die Temperatur am Eingang des Verdichters (6) gemessen und dem Expansionsorgan (8) zugeführt wird und der Kältemitteldurchlass des Expansionsorgans (8) so geregelt wird, dass das Kältemittel am Eingang des Verdichters (6) eine nahezu konstante Überhitzung aufweist.

## Claims

1. Compression-type refrigeration system of a motor-vehicle air-conditioning unit having a supercritical process, a refrigerant being circulated in the compression-type refrigeration system via refrigerant lines (10) from a compressor (6) via a gas cooler (27), an expansion member (8) and an evaporator (9) back to the compressor (6), **characterized in that** the compressor (6) is driven by an electric motor (5) with motor-control device (12), and **in that** the motor (5) and/or the motor-control device (12) is arranged in such a way that the dissipation of the heat loss of the motor (5) and/or of the motor-control device (12) is effected essentially via the refrigerant of the compression-type refrigeration system, and **in that** a temperature sensor (13) is attached at the inlet of the compressor (6) which is connected to the expansion member (8).

2. Compression-type refrigeration system according to one of the preceding claims, **characterized in that** the electric motor (5) and the compressor (6) are accommodated in a common housing.

3. Compression-type refrigeration system according to one of the preceding claims, **characterized in that** the refrigerant flows around the electric motor (5).

4. Compression-type refrigeration system according to one of Claims 1 to 3, **characterized in that** the motor-control device (12) is arranged in close thermal contact with the refrigerant between the outlet of the expansion member (8) and the inlet of the compressor (6).

5. Compression-type refrigeration system according to Claim 4, **characterized in that** the refrigerant flows around the motor-control device (12).

6. Compression-type refrigeration system according to one of the preceding claims, **characterized in that** the means for setting the superheating at the compressor inlet contain a thermostatic expansion valve.

7. Compression-type refrigeration system according to one of the preceding claims, **characterized in that** the means for setting the superheating at the compressor inlet contain an electronically controlled expansion valve.

8. Compression-type refrigeration system according to one of the preceding claims, **characterized in that** the refrigerant used is CO₂.

9. Compression-type refrigeration system according to one of the preceding claims, **characterized in that** there is an additional heat exchanger (28) for the heat exchange between the high-pressure side and the low-pressure side of the refrigeration system.

10. Method of operating a compression-type refrigeration system of a motor vehicle, having a compressor (6), driven by an electric motor (5) with motor-control device (12), a gas cooler (27), a controllable expansion member (8) and an evaporator (9), and also a refrigerant circulation from the compressor (6) via the gas cooler (27), the controllable expansion member (8) and the evaporator (9) back to the compressor (6) with a refrigerant which, due to the mode of operation of the compression-type refrigeration system, has regions with a lower temperature level and a higher temperature level, **characterized in that** the compression-type refrigeration system has a supercritical process, the electric motor (5) and/or the motor-control device (12) is cooled by the refrigerant of the compression-type refrigeration system in the region of the lower temperature level, and the temperature at the inlet of the compressor (6) is measured and supplied to the expansion member (8), and the rate of flow of refrigerant through the expansion member (8) is controlled in such a way that the refrigerant at the inlet of the compressor (6) has virtually constant superheating.

## Revendications

1. Système de refroidissement à compression d'une installation de climatisation pour véhicule automobile ayant un cycle de procédé supercritique, un cycle de rotation d'un réfrigérant ayant lieu dans le système de refroidissement à compression à travers des conduites de réfrigérant (10) à partir d'un compresseur (6), par l'intermédiaire d'un refroidisseur des gaz (27), d'un organe d'expansion (8) et d'un évaporateur (9) et retour vers le compresseur (6) **caractérisé par le fait que** le compresseur (6) est entraîné par un moteur électrique (5) avec un dispositif de commande du moteur (12) et que le moteur (5) et/ou le dispositif de commande du moteur (12) sont disposés de telle manière que l'évacuation de la chaleur dissipée par le moteur (5) et/ou par le dispositif de commande du moteur (12) a lieu essentiellement par l'intermédiaire du réfrigérant du système de refroidissement à compression et que, à l'entrée du compresseur (6), est montée une sonde de température (13), qui est reliée, pour le réglage de la surchauffe du réfrigérant à l'entrée du compresseur, à l'organe d'expansion (8).

2. Système de refroidissement à compression selon l'une des revendications précédentes **caractérisé par le fait que** le moteur électrique (5) et le compresseur (6) sont logés dans un carter commun.

3. Système de refroidissement à compression selon l'une des revendications précédentes **caractérisé par le fait que** le moteur électrique (5) est entouré de réfrigérant.

4. Système de refroidissement à compression selon l'une des revendications 1 à 3 **caractérisé par le fait que** le dispositif de commande du moteur (12) est disposé en contact thermique étroit avec le réfrigérant entre la sortie de l'organe d'expansion (8) et l'entrée du compresseur (6).

5. Système de refroidissement à compression selon la revendication 4 **caractérisé par le fait que** le dispositif de commande du moteur (12) est entouré de réfrigérant.

6. Système de refroidissement à compression selon l'une des revendications précédentes **caractérisé par le fait que** les moyens permettant de régler la surchauffe à l'entrée du compresseur comprennent une soupape d'expansion thermostatique.

7. Système de refroidissement à compression selon l'une des revendications précédentes **caractérisé par le fait que** les moyens permettant de régler la surchauffe à l'entrée du compresseur comprennent une soupape d'expansion régulée électroniquement.

8. Système de refroidissement à compression selon l'une des revendications précédentes **caractérisé par le fait qu'**on utilise du CO₂ comme réfrigérant.

9. Système de refroidissement à compression selon l'une des revendications précédentes **caractérisé par le fait qu'**il y a un échangeur de chaleur (28) supplémentaire pour l'échange de chaleur entre la partie haute pression et la partie basse pression du système de refroidissement.

10. Procédé permettant d'exploiter un système de refroidissement à compression dans un véhicule automobile, comprenant un compresseur (6) entraîné par un moteur électrique (5) avec un dispositif de commande du moteur (12), un réfrigérateur des gaz (27), un organe d'expansion réglable (8) et un évaporateur (9), ayant un circuit du réfrigérant partant du compresseur (6), par l'intermédiaire du réfrigérateur des gaz (27), de l'organe d'expansion réglable (8) et de l'évaporateur (9) et retour au compresseur (6) avec un réfrigérant, et qui a, dû au mode de fonctionnement du système de refroidissement à compression, une zone avec un niveau bas de température et une zone avec un niveau haut de température **caractérisé par le fait que** le système de refroidissement à compression a un cycle de procédé supercritique, que le moteur électrique (5) et/ou le dispositif de commande du moteur (12) sont réfrigérés par le réfrigérant du système de refroidissement à compression d ans la zone de niveau bas de température, que la température est mesurée à l'entrée du compresseur (6) et est appliquée à l'organe d'expansion (8) et que le débit du réfrigérant de l'organe d'expansion (8) est régulé de telle sorte que le réfrigérant a une surchauffe presque constante à l'entrée du compresseur (6).
